# EUROPÄISCHE PATENTANMELDUNG

(11) **EP 4 648 175 A1**
(43) Veröffentlichungstag der Anmeldung: **12.11.2025**
(21) Anmeldenummer: 24175142.9
(22) Anmeldetag: 10.05.2024
(51) Int. Cl.: H01M 10/44, H01M 10/48, H01M 10/54, H01M 10/613, H01M 10/6572, H02J 7/00

(54) **VERFAHREN ZUM TIEFENENTLADEN VON BATTERIEN FÜR EINEN RECYCLING-PROZESS UND VORRICHTUNG ZUM TIEFENENTLADEN EINER BATTERIE**

(71) Anmelder: Siemens Aktiengesellschaft, 80333 München (DE)
(72) Erfinder: Bellut, Lukas, 97737 Gemünden am Main (DE); Fischer, Michael, 91320 Ebermannstadt (DE); Katzer, Felix, 90763 Fürth (DE); Kraus, Alexander, 90489 Nürnberg (DE); Radinger, Hannes, 90459 Nürnberg (DE); Schmid, Arthur, 80337 München (DE); Schricker, Barbara, 91058 Erlangen (DE)
(74) Vertreter: Siemens Patent Attorneys

(57) **Zusammenfassung**

Die Erfindung betrifft ein Verfahren zum Tiefenentladen einer Batterie (2) für einen Recyclingprozess, umfassend folgende Schritte:
- Messen der Temperatur der Batterie (2),
-Anschließen mindestens eines Verbrauchers (4) zur Entladung der Batterie (2) dadurch gekennzeichnet, dass
- ein elektrisches Kühlelement (6) physisch zur Kühlung an die Batterie (2) angeordnet wird
- ein Temperaturschwellwert (Ts) für die Temperatur (T) der Batterie (2) an einem Temperaturmesspunkt (8) der Batterie (4) festgelegt wird
- und der Verbraucher (4) in Form des Kühlelementes (6) zugeschaltet wird,
- wenn der Temperaturschwellwert (Ts) überschritten wird.

## Beschreibung

Die Erfindung betrifft ein Verfahren zum Tiefenentladen einer Batterie für einen Recycling-Prozess nach dem Oberbegriff des Patentanspruchs 1 sowie eine Vorrichtung zum Tiefenentladen einer Batterie nach dem Oberbegriff des Patentanspruchs 9.

Das sichere und effiziente Recyceln von Batterien ist ein Thema von wachsender Bedeutung angesichts des steigenden Verbrauchs von elektronischen Geräten und der wachsenden Zahl an Elektroautos. Unter den verschiedenen Schritten des Recycling-Prozesses spielt die Tiefenentladung vor dem eigentlichen Rückgewinnungsprozess, insbesondere im Hinblick auf die Sicherheit während des Recycling-Prozesses eine besondere Rolle. Von Lithiumionen-Batterien können bei unsachgemäßer Behandlung Gefahren ausgehen. In der Regel werden die Batteriezellen im ersten Schritt des Recyclings in einem mechanischen Bearbeitungsschritt zerkleinert, also geschreddert. Dabei wird die noch in der Batterie gespeicherte Energie schlagartig frei und stellt somit ein Sicherheitsrisiko dar. Um Zellen aus der Batterie herauszulösen ist ein mehrstufiger Demontageprozess nötig, der ebenso wie der Transport der Batterien innerhalb einer Fabrik größtenteils manuell stattfindet. Ein Risiko für die Mitarbeiter ist deshalb unbedingt auszuschließen. Bei der Tiefenentladung wird die verbleibende Energie in den Batterien (hierunter werden Batteriezellen ebenso wie Module von mehreren Zellen bzw. Antriebsbatterien aus mehreren Modulen verstanden) kontrolliert und sicher entladen. Dieser Prozess gewährleistet, dass die Batterien in einem stabilen und sicheren Zustand sind, bevor sie weiterverarbeitet werden. Das verringert das Risiko von unkontrollierter Energieentladung während des Transportes oder der Lagerung und schützt so die Mitarbeiter und die Anlagen, die für das Recycling zuständig sind vor möglichen Gefahren. Bei der Tiefenentladung wird die Batterie in einem Spannungsbereich außerhalb der Empfehlung des Herstellers betrieben. Dadurch können im Zellinneren chemische Reaktionen auftreten, die zu einer unkontrollierten Erwärmung der Batterie führen. Allein der effektive Kurzschluss der Batterie bei ca. 0 V führt dazu, dass der verbliebene Strom am Innenwiderstand der Batterie (welcher bei tiefen SoC auch eher zunimmt) in Wärme umgewandelt wird. Eine zu starke Erhitzung kann ein thermisches Durchgehen der Zelle induzieren und die thermische Propagation des gesamten Moduls zur Folge haben, wodurch starke Brand- und Explosionsgefahr besteht. Da oftmals für den Prozess der Tiefenentladung das Batteriemanagementsystem (BMS) des Herstellers nicht zugänglich ist (da entweder keine Tiefenentladung als Funktion vorgesehen ist oder das BMS anderweitig nicht zugänglich ist), kann die Modulspannung, also die Spannung vieler einzelner Zellen eines Moduls, nur über die äußeren Kontakte des sogenannten Busbars gesteuert werden. Das bedeutet, dass auch zusätzliche Funktionen des BMS, wie z. B. die Regelung der Temperatur, nicht durch den Recycler genutzt werden können.

Eine thermische Zersetzung aufgrund eines Durchgehens der Batterie wird nach dem Stand der Technik durch zwei verschiedene Möglichkeiten derzeit vermieden. Zum einen durch eine sogenannte chemische Deaktivierung, wobei das Batteriemodul, also die Batterie, in einer Salzwasser-Lösung entladen wird, um eine zu starke Erwärmung zu vermeiden. Hierbei kann das Modul zusätzlich an einen Verbraucher angeschlossen werden, um die elektrische Energie in der Zelle schnell abzuführen. Ein Problem dabei ist, dass der Prozess lange dauert. Eine Alternative hierzu ist die langsame Tiefenentladung. Hierbei besagt jedoch schon die Wortwahl, dass dies einen erheblichen Zeitaufwand bedeutet, was insbesondere bei großtechnischen Recycelvorgängen einen erheblichen Kostenfaktor in dem Gesamtprozess darstellt.

Die Aufgabe der Erfindung besteht darin, ein sicheres Verfahren und eine Vorrichtung zur Tiefenentladung von Batterien bereitzustellen, die einem Recycling-Prozess vorgeschaltet sind, die gegenüber dem Stand der Technik eine höhere Sicherheit aufweisen und in einer kürzeren Zeit umsetzbar sind.

Die Lösung der Aufgabe besteht in einem Verfahren zum Tiefenentladen einer Batterie mit den Merkmalen des Patentanspruchs 1 sowie in einer Vorrichtung zum Tiefenentladen einer Batterie mit den Merkmalen des Patentanspruchs 9.

Das Verfahren zum Tiefenentladen von Batterien für einen Recycling-Prozess umfasst dabei folgende Schritte:
- Messen der Temperatur der Batterie,
- Anschließen mindestens eines Verbrauchers zur Entladung der Batterie.
   Die Erfindung zeichnet sich dadurch aus, dass
- ein elektrisches Kühlelement physisch zur Kühlung an die Batterie angeordnet wird
- ein Temperaturschwellenwert Ts für die Temperatur T der Batterie an einem Temperaturmesspunkt der Batterie festgelegt wird,
- und der Verbraucher in Form des Kühlelementes zugeschaltet wird,
- wenn der Temperaturschwellwert T_{S} überschritten wird.

Der Vorteil der beschriebenen Erfindung gegenüber dem Stand der Technik besteht darin, dass zum einen die Restenergie, die in der Batterie enthalten ist, in das elektrische Kühlelement als Verbraucher umgeleitet wird und somit zur Kühlung der Batterie genutzt werden kann. Ferner kann durch die Batteriekühlung mittels des elektrischen Kühlelementes der Entladeprozess beschleunigt werden, da eine chemische Reaktion innerhalb der Batterie durch die Kühlung unterbunden werden kann und eine schnellere Entladung durchgeführt werden kann. Das heißt, dass durch die beschriebene Erfindung sowohl die Entladegeschwindigkeit erhöht werden kann und gleichzeitig ein sicheres Entladen bei gleichzeitiger Nutzung der Restenergie der Batterie gewährleistet wird.

In einer zweckmäßigen Ausgestaltungsform kann ein Entladestrom an die Batterie angelegt werden, die zum Entladen der Batterie führt und in Abhängigkeit der Temperatur der Batterie geregelt wird.

In einer weiteren Ausgestaltungsform erfolgt eine Messung der Batteriespannung. Die Batteriespannung korreliertje nach Batterietyp indirekt proportional mit der Batterietemperatur, weshalb bei einer bestimmten Batteriespannung, insbesondere niedrigen Batteriespannungen mit einem Anstieg der Temperatur zu rechnen ist und diese anhand der Batteriespannung vorhergesagt werden kann. Somit ist es auch zweckmäßig, den Entladestrom der Batterie in Abhängigkeit der Batteriespannung und der Batterietemperatur zu regeln.

Ferner ist es zweckmäßig, dass bei Bedarf das elektrische Kühlelement durch eine weitere Energiequelle gespeist wird, sodass wenn nicht mehr ausreichend Energie aus der Batterie zur Verfügung steht, dennoch Kühlleistung zur schnelleren Entladung der Batterie durch das Kühlelement eingebracht werden kann.

In einer besonderen Ausgestaltungsform ist das Kühlelement in Form eines thermoelektrischen Elementes, das auch als Peltier-Element ausgestaltet ist. Grundsätzlich können als elektrische Kühlelemente jedoch auch Kühlkompressoren Einsatz finden. Der Vorteil bei einem elektrischen Element besteht jedoch darin, dass es direkt mit Gleichstrom aus der Batterie betrieben werden kann.

In einer weiteren Ausgestaltungsform der Erfindung ist es zweckmäßig, wenn die Temperatur als Funktion der Zeit gemessen wird. Dabei kann es zweckmäßig sein, dass eine Kühlleistung des Kühlelementes als Funktion der Temperatur oder als Funktion der zeitlichen Temperaturänderung geregelt wird.

Ein weiterer Bestandteil der Erfindung ist eine Vorrichtung zur Tiefenentladung einer Batterie, die dabei folgende Merkmale umfasst:
Zum einen eine Temperaturmessvorrichtung, eine Steuerung und mindestens ein Verbraucher, der mit der Batterie zu deren Entladung elektrisch verbunden ist. Die Vorrichtung zeichnet sich dadurch aus,
   - dass die Steuerung zur Übertragung von Messsignalen in Verbindung mit der Temperaturvorrichtung steht, und
   - in der Steuerung ein Temperaturschwellwert Ts hinterlegt ist,
   - mindestens ein Verbraucher ein elektrisches Kühlelement ist und
   - das Kühlelement mittels der Steuerung ansteuerbar ist, wobei
      das Kühlelement physisch so an die Batterie angelegt ist, dass es eine Kühlung der Batterie bewirkt und
   - eine Zuschaltung des Kühlelementes durch die Steuerung bei Überschreiten des Temperaturschwellwertes T_{S} erfolgt.

Die Vorteile der beschriebenen Vorrichtung sind dieselben, die bereits bezüglich des Verfahrens beschrieben sind. Zum einen lässt sich die Restenergie der Batterie sicher für deren Kühlung nutzen, weshalb ein sicheres Entladen gewährleistet wird und die Entladegeschwindigkeit mittels der beschriebenen Vorrichtung erhöht werden kann.

In Bezug auf die Verfahrensansprüche sowie aus dem beschriebenen Vorrichtungsanspruch seien hierbei folgende Definitionen vorgenommen:
Unter einer Batterie wird hierbei jede Art von Batterien, insbesondere wiederaufladbare Batterien, also Akkumulatoren verstanden. Diese Batterien können in Form von einzelnen Batteriezellen als kleinste Batterieeinheit, als Module von mehreren Batteriezellen oder als Batteriepack, einer Kombination von mehreren Modulen auftreten. Für alle beschriebenen Einheiten, also die kleinste Batteriezelle, das Batteriemodul und das Batteriepack wird jeweils vereinfachend der Begriff Batterie verwendet. Dies wird deshalb so verwendet, da das beschriebene Verfahren und die beschriebene Vorrichtung grundsätzlich auf jede Gebindegröße an Batterien anwendbar sind und angewendet werden.

Unter einem Verbraucher wird alles verstanden, was der Batterie elektrische Energie entziehen kann, das kann eine Glühbirne, eine Widerstandsheizung, aber auch eben das beschriebene elektrische Kühlelement sein. Auch das Umwandeln der elektrischen Energie der Batterie in Wechselstrom und das Einspeisen ins Stromnetz wird dabei als Verbraucher verstanden. Als Verbraucher kann auch eine Stromsenke verstanden werden.

In einem Spezialfall der Tiefentladung kann der Batterie unterhalb von 0 V auch elektrische Energie zugeführt werden, die zur Erwärmung führt und eine Kühlung notwendig macht.

Der Temperaturschwellwert hängt von der Bauweise und der Umgebungstemperatur der Batterie ab. Außerdem hängt der Temperaturschwellwert von dem Messpunkt an oder in der Batterie ab. Die Temperatur kann beispielsweise am Gehäuse oder mitten zwischen den Zellen gemessen werden, sodass der Temperaturschwellwert für jede Anordnung ein anderer sein kann. Insbesondere kann der Temperaturschwellwert auch so niedrig gewählt werden, dass er mit der Umgebungstemperatur der Batterie während des Tiefenentladeprozesses zusammenfällt. Das bedeutet wiederum, dass die Zuschaltung des elektrischen Kühlelementes als Verbraucher bereits zu Beginn des Tiefenentladeprozesses erfolgen kann.

Die Steuerung kann beispielsweise eine Industriesteuerung, wie die Siemens S71200 sein. Sie kann auch eine kombinierte Steuerung sein, die aus verschiedenen Steuerelementen besteht, die an unterschiedlichen Orten vorliegen. Beispielsweise kann ein leistungselektronisches Schaltelement direkt vor Ort der Tiefenentladevorrichtung angeordnet sein und eine weitere Steuerung durch eine Cloudsteuerung erfolgen. Das heißt, auch dezentrale Steuerungen in Kombination mit lokalen Steuergeräten sind dabei möglich.

In einer weiteren Ausgestaltungsform ist eine Stromsenke zur Bereitstellung eines Batterie-Entladestroms vorgesehen. Diese ist ebenfalls durch die Steuerung steuerbar. Ferner ist es zweckmäßig, wenn eine Batteriespannungsmessvorrichtung vorgesehen ist, die in Verbindung mit der Steuerung steht.

Dabei ist es ferner zweckmäßig, wenn die Kühlleistung des Kühlelementes in Abhängigkeit der Batteriespannung und der Batterietemperatur T mittels der Steuerung regelbar ist.

Ferner ist es zweckmäßig, dass die Stromsenke mittels der Steuerung in Abhängigkeit der Batteriespannung und der Batterietemperatur steuerbar ist.

Ferner ist es zweckmäßig, dass eine weitere Energiequelle für das Kühlelement zur Verfügung steht, die durch die Steuerung ansteuerbar ist.

Zudem ist in einer besonderen Ausgestaltungsform das Kühlelement ein thermoelektrisches Element, das auf unterschiedlich dotierten Halbleiterelementen basiert.

Weitere Ausgestaltungsformen und weitere Merkmale der Erfindung werden anhand der folgenden Figuren näher erläutert. Merkmale mit denselben Bezeichnungen aber in unterschiedlicher Ausgestaltungsform enthalten hierbei dasselbe Bezugszeichen. Die Zeichnungen sind rein schematischer Natur und stellen keine Einschränkung des Schutzbereiches dar.

Dabei zeigen:
- Figur 1: eine Kurve, die den zeitlichen Verlauf der Batteriespannung und den gleichzeitigen Temperaturverlauf darstellt.
- Figur 2: eine schematische Darstellung einer Entladevorrichtung für eine Batterie mit einem daran angeordneten Kühlelement und
- Figur 3: eine Batterie mit einem daran angeordneten thermoelektrischen Element in Form eines Peltier-Elementes.

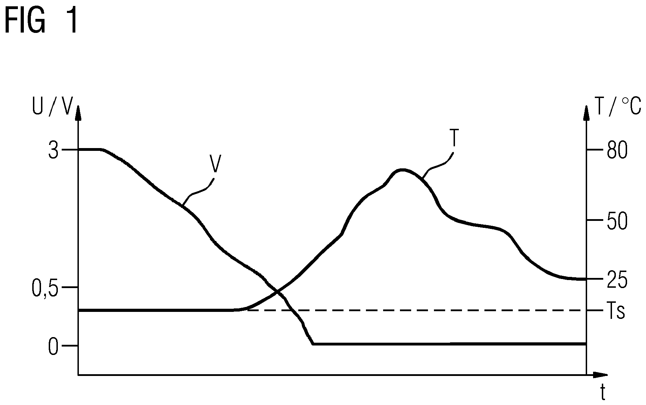

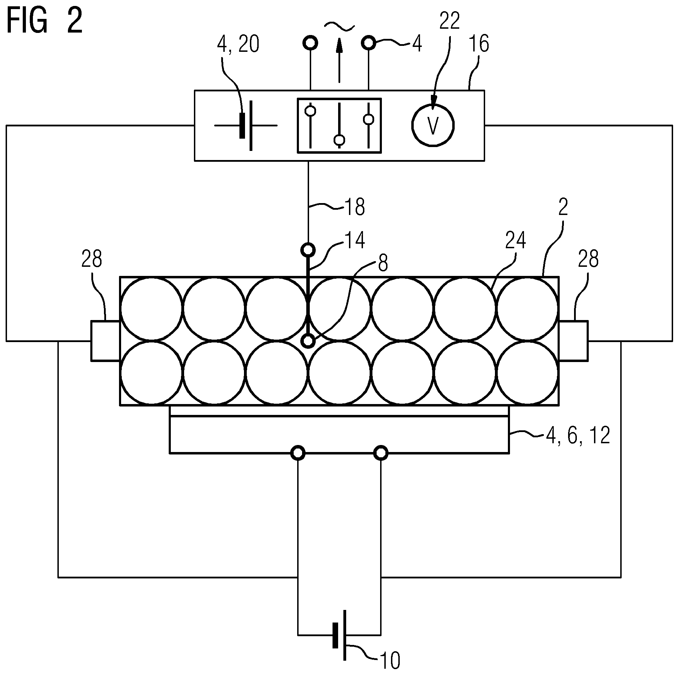

In Figur 1 ist eine schematische Darstellung der Batteriespannung über einen Zeitverlauf gegeben. Dabei handelt es sich um einen Entladeprozess der Batterie. Ferner ist in der Figur 1 die Batterietemperatur als Funktion der Zeit aufgetragen und mit einem T gekennzeichnet. An den Y-Achsen sind typische Werte für Batteriespannung und Temperatur für eine einzelne Zelle angegeben. Dabei ist zu erkennen, dass bei einem langsamen Entladeprozess die Temperatur üblicherweise konstant bleibt, während die Batteriespannung beispielsweise von 3 V auf 0,5 V sinkt. Erst bei Spannungen unterhalb eines kritischen Wertes fängt die Temperatur T an zu steigen. Dies liegt daran, dass hierbei elektrochemische Prozesse ablaufen, die zur Tiefenentladung der Batterie 2 führen und die exothermer Natur sind. Anhand des Kurvenverlaufs von T ist zu erkennen, dass bei einer Batteriespannung von 0 V durchaus sehr hohe Temperaturen auftreten können, die für den Anwender wie auch eine umgebende Vorrichtung problematisch werden können. Außerdem ist es möglich, dass weitere Zellen im Verbund ebenfalls zu einer kritischen chemischen Reaktion führen und dabei eine Kettenreaktion und ein Durchbrennen der Batterie 2 als gefährliche Situation auftreten kann. Dieser indirekt proportionale Verlauf von Spannung und Temperatur hat zur Folge, dass gegen die Temperaturerhöhung beim Tiefenentladeprozess Gegenmaßnahmen getroffen werden müssen. Üblicherweise wird darauf geachtet, dass die Tiefenentladung sehr langsam vonstattengeht. Dies kann aber in einem großtechnischen Prozess nur schwer wirtschaftlich durchgeführt werden. Außerdem gibt es keine Garantie dafür, dass nicht trotzdem erhebliche Temperaturerhöhungen in der Batterie auftreten. Daher wird die folgende Vorrichtung, wie sie in Figur 2 dargestellt ist, vorgeschlagen. Hierbei ist eine Steuerung 16 vorgesehen, die beispielsweise in Form einer S71200 von Siemens ausgestaltet ist. Grundsätzlich erfolgt das Tiefenentladen der Batterie 2 zunächst dadurch, dass ein Verbraucher 4 an die Batterie angeschlossen wird, um diese zu entladen. Dieser Verbraucher kann beispielsweise ein Umrichter sein, der die elektrische Energie aus der Batterie 2 in ein hier nicht dargestelltes Stromnetz einspeist. Ferner kann ein Verbraucher auch eine externe Stromsenke 20 sein,. Zweckmäßig ist es jedoch, wenn als Verbraucher 4 ein elektrisches Kühlelement 6 an die Batterie 2 angelegt wird, sodass die Batterie 2 durch dieses Kühlelement 6 schon zu Beginn des Entladeprozesses heruntergekühlt wird.

Der Zeitpunkt, bei dem das elektrische Kühlelement 6 als Verbraucher 4 durch die Steuerung 16 zugeschaltet wird und der Batterie 2 elektrische Energie zur Kühlung entzieht, hängt von einem Temperaturschwellwert T_{S} ab, der stark abhängig von der Batterie 2 an sich, von der Umgebungstemperatur der Batterie 2 und von der Restenergiemenge in der Batterie ist. Im vorliegenden Beispiel gemäß Figur 1 ist der Temperaturschwellwert so hoch niedrig gewählt, dass er bereits bei Beginn der elektrischen Entladung der Batterie 2 überschritten ist, sodass der Verbraucher 4 in Form des elektrischen Kühlelementes 6 gleich zu Beginn des Entladeprozesses zugeschaltet wird. Dies bewirkt, dass bereits zu Beginn des Entladens, bei dem die Zelltemperatur der Batterie 2 noch der Umgebungstemperatur entspricht, bereits eine Kühlung der Batterie 2 mit deren elektrischer Energie erfolgt. Das heißt, die Batterie wird schon gekühlt, bevor ein Temperaturanstieg auftritt, was wiederum dazu führt, dass bei fortschreitender Entladung der Temperaturanstieg verhältnismäßig gering ausfällt und beispielsweise nicht mehr als 80°C beträgt. Die Batterie 2 ist somit bereits zu einem Zeitpunkt durch die Kühlung vorgekühlt, zu dem die Batterie 2 an sich noch genügend elektrische Energie enthält, um das Kühlelement 6 auch zu speisen. In dem hier beschriebenen Fall wird ein weiterer Verbraucher 4 zur Entladung der Batterie nicht benötigt.

In der Figur 2 ist ferner schematisch ein Temperaturmesspunkt 8 dargestellt, der hier zwischen einzelnen Batteriezellen 24 der Batterie 2 liegt. Hierzu wird ein nicht näher dargestelltes Thermoelement als Temperaturmessvorrichtung 14 zwischen die einzelnen Batteriezellen 24 geschoben und über eine Messleitung ein Messsignal 18 an die Steuerung 16 übertragen. Die Steuerung 16 wertet das Messsignal 18 aus und je nach hinterlegtem Temperaturschwellwert Ts wird das elektrische Kühlelement 6 zur Kühlung der Batterie 2 zugeschaltet.

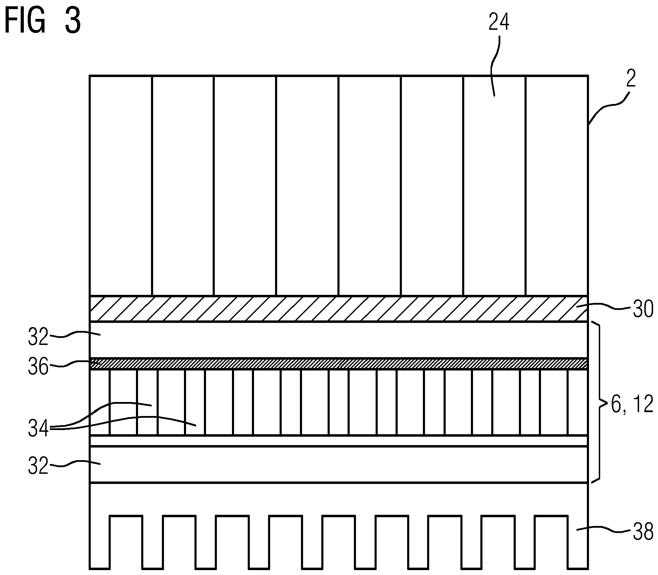

In Figur 3 ist eine schematische Darstellung einer Batterie 2 mit Batteriezellen 24 gegeben, die über eine Wärmeleitschicht 30 mit einem elektrischen Kühlelement 6, hier ausgestaltet als Peltier-Element 12, also als thermoelektrisches Element 12 ausgestaltet ist. Dieses thermoelektrische Element 12 weist dabei zwei Trägerplatten 32 auf, die mit elektrischen Kontaktierungen 36 versehen sind und zwischen den elektrischen Kontaktierungen 36 unterschiedlich dotierte (p-dotiert und n-dotiert) Halbleiterelemente 34 getrennt voneinander angeordnet sind. Durch die Eintragung von elektrischem Strom in das thermoelektrische Element 12 wird aufgrund des Stromflusses durch die Halbleiterelemente ein Temperaturunterschied erzeugt, der bei richtiger Polarisierung zur Kühlung an der der Batterie zugewandten Seite des thermoelektrischen Elementes 12 führt. Die Wärmeleitschicht kann dabei fakultativ ausgestaltet sein und unterschiedliche Formen annahmen, beispielsweise in Form einer elektrischen Leitpaste. Auf der gegenüberliegenden Seite zur Batterie 2 ist hierbei ein herkömmlicher Kühlkörper 38 am thermoelektrischen Element 12 angeordnet, über den die entzogene Wärme an die Umgebung abgegeben wird.

Grundsätzlich ist es auch zweckmäßig, dass ein Kühlkompressor als elektrisches Kühlelement 6 herangezogen wird, der ebenfalls eine Kühlplatte bedient, die hier nicht dargestellt ist und die ebenfalls an die Batterie 2 über eine Wärmeleitschicht 30 angelegt wird. Allerdings benötigt ein Kühlkompressor in der Regel Wechselstrom, weshalb der Strom aus der Batterie 2 über einen Umrichter in Wechselstrom umgerichtet werden muss und hierdurch Verluste entstehen. Außerdem ist ein zusätzliches Bauelement nötig. Grundsätzlich ist daher das thermoelektrische Element 12, das mit Gleichstrom betrieben wird, gegenüber einem Kühlkompressor im Vorteil. Allerdings kann der Kühlkompressor eine höhere Kühlleistung erzeugen als ein thermoelektrisches Element 12.

### Bezugszeichenliste

- 2: Batterie
- 4: Verbraucher
- 6: elektrisches Kühlelement
- Ts: Temperaturschwellwert,
- 8: Temperaturmesspunkt,
- V: Batteriespannung
- T: Temperatur
- t: Zeit
- DT: zeitliche Temperaturänderung
- 10: Energiequelle
- 12: thermoelektrisches Element
- 14: Temperaturmessvorrichtung
- 16: Steuerung
- 18: Messsignal
- 20: Stromquelle
- 22: Spannungsmessvorrichtung
- 24: Batteriezelle
- 28: Batteriepole
- 30: Wärmeleitschicht
- 32: Trägerplatte
- 34: Halbleiterelement
- 36: Kontaktierung
- 38: Kühlkörper

## Patentansprüche

1. Verfahren zum Tiefenentladen einer Batterie (2) für einen Recyclingprozess, umfassend folgende Schritte:
- Messen der Temperatur der Batterie (2),
- Anschließen mindestens eines Verbrauchers (4) zur Entladung der Batterie (2) **dadurch gekennzeichnet, dass**
- ein elektrisches Kühlelement (6) physisch zur Kühlung an die Batterie (2) angeordnet wird
- ein Temperaturschwellwert (Ts) für die Temperatur T der Batterie (2) an einem Temperaturmesspunkt (8) der Batterie (4) festgelegt wird
- und der Verbraucher (4) in Form des Kühlelementes (6) zugeschaltet wird,
- wenn der Temperaturschwellwert (Ts) überschritten wird.

2. Verfahren nach Anspruch 1, **dadurch gekennzeichnet, dass** ein Entladestrom der Batterie (2) in Abhängigkeit der Temperatur der Batterie (2) geregelt wird.

3. Verfahren nach Anspruch 1 oder 2, **dadurch gekennzeichnet, dass** eine Messung der Batteriespannung (V) erfolgt.

4. Verfahren nach Anspruch 1 bis 3, **dadurch gekennzeichnet, dass** der Entladestrom in Abhängigkeit der Batteriespannung (V) und der Batterietemperatur (T) geregelt wird.

5. Verfahren nach einem der vorhergehenden Ansprüche, **dadurch gekennzeichnet, dass** das elektrische Kühlelement (6) durch eine weitere Energiequelle (10) gespeist wird.

6. Verfahren nach einem der vorhergehenden Ansprüche, **dadurch gekennzeichnet, dass** das Kühlelement (6) ein thermoelektrische Element (12) ist.

7. Verfahren nach einem der vorhergehenden Ansprüche, **dadurch gekennzeichnet, dass** die Temperatur (T) als Funktion der Zeit (t) gemessen wird.

8. Verfahren nach einem der vorhergehenden Ansprüche, **dadurch gekennzeichnet, dass** eine Kühlleistung des Kühlelements (6) als Funktion der Temperatur (T) oder als Funktion der zeitlichen Temperaturänderung (DT) geregelt wird.

9. Vorrichtung zum Tiefenentladen einer Batterie (2), umfassend eine Temperaturmessvorrichtung (14), eine Steuerung (16) und mindestens einen Verbraucher (4), der mit der Batterie (2) zu deren Entladung elektrisch verbunden ist, **dadurch gekennzeichnet, dass**
- die Steuerung (16) zur Übertragung von Messsignalen (18) in Verbindung mit der Temperaturmessvorrichtung (14) steht,
- in der Steuerung ein Temperaturschwellwert (T_{S}) hinterlegt ist,
- mindestens ein Verbraucher (4) ein elektrisches Kühlelement (6) ist und
- das Kühlelement (6), (12) mittels der Steuerung (16) ansteuerbar ist, wobei
- das Kühlelement (6), (12) physisch so an die Batterie (2) angelegt ist, dass es eine Kühlung der Batterie (2) bewirkt und
- eine Zuschaltung des Kühlelements (6), (12) durch die Steuerung (16) bei Überschreiten des Temperaturschwellwertes (T_{S}) erfolgt.

10. Vorrichtung nach Anspruch 9, **dadurch gekennzeichnet, dass** eine Stromsenke (20) zur Bereitstellung eines Batterie-Entladestroms vorgesehen ist und diese durch die Steuerung (16) steuerbar ist.

11. Vorrichtung nach Anspruch 9 oder 10, **dadurch gekennzeichnet, dass** eine Batteriespannungs-Messvorrichtung (22) vorgesehen ist, die in Verbindung mit der Steuerung (16) steht.

12. Vorrichtung nach einem der Ansprüche 9 bis 11, **dadurch gekennzeichnet, dass** eine Kühlleistung des Kühlelements (6), (12) in Abhängigkeit der Batteriespannung (V) und der Batterietemperatur (T) mittels der Steuerung regelbar ist.

13. Vorrichtung nach einem der Ansprüche 9 bis 12, **dadurch gekennzeichnet, dass** die Stromsenke (20) mittels der Steuerung (16) in Abhängigkeit der Batteriespannung (V) und der Batterietemperatur (T) steuerbar ist.

14. Vorrichtung nach einem der Ansprüche 9 bis 13, **dadurch gekennzeichnet, dass** eine weitere Energiequelle (10) für das Kühlelement (6), (12) zur Verfügung steht, die durch die Steuerung (16) ansteuerbar ist.

15. Vorrichtung nach einem der Ansprüche 9 bis 14, **dadurch gekennzeichnet, dass** das Kühlelement (6) ein thermoelektrisches Element (12) ist.
